# EUROPEAN PATENT SPECIFICATION

(11) **EP 2 496 868 B1**
(45) Date of publication and mention of the grant of the patent: **12.03.2014**
(21) Application number: 10785196.6
(22) Date of filing: 03.11.2010
(51) Int. Cl.: F16K 7/10, F16L 55/134

(54) **DUCT PLUG INFLATABLE SAFETY DEVICE**
AUFBLASBARE SICHERHEITSVORRICHTUNG FÜR EINEN KANALSTOPFEN
DISPOSITIF DE SECOURS GONFLABLE À OBTURATEUR DE CONDUIT

(30) Priority: 04.11.2009 US 258025 P
(43) Date of publication of application: 12.09.2012
(73) Proprietor: Holcim Technology Ltd., 8645 Rapperswil-Jona (CH)
(72) Inventor: KUTACH, Kyle, Ovilla TX 75154 (US); HINDS, Robert, Midlothian TX 76065 (US)
(74) Representative: Keschmann, Marc
(86) International application number: PCT/IB2010/002801
(87) International publication number: WO 2011/055214

(56) References cited:
- DE-U1- 20 014 625
- GB-A- 2 140 894
- GB-A- 2 413 165
- US-A1- 2004 144 439

## Description

This present disclosure relates generally to safety devices and more particularly to an inflatable safety device.

Cement manufacturing plants contain many tubular or generally cylindrical overhead conduits and areas such as smoke stacks, ducts, kilns and the like. See for example, U.S. Patent Nos. 7,048,784 entitled "Method and System for Treating Exhaust Gas from Cement Manufacturing Equipment" which issued to Terasaki et al. on May 23, 2006, and 6,264,738 entitled "Method of Producing Cement Clinker and Associated Device" which issued to Lorke et al. on July 24, 2001. When workers need to enter such conduits and areas for maintenance, there is always the risk that debris, such as bricks, refractory materials, ash chunks and other loose items, may fall onto the workers.

It is known to provide rigid temporary cages which are made of metal poles and mesh material (similar to a chain link fence) which must be assembled in place and which force workers to be directly underneath their protective canopy in order to enjoy any protection from falling objects. These conventional devices, however, are complicated, time consuming to erect and cannot be used when erecting scaffolding inside of a duct.

### SUMMARY

In accordance with the present invention, an inflatable safety device is used. In another aspect, an inflatable device is used to temporarily plug a conduit or area of a cement manufacturing plant.

Devices used to dose off pipes are known from GB 2 413 165 A.

In one aspect, the device is used because portable and lightweight; it is easy to move from one application area to another with little preparation. In another aspect, the device is used because it requires no assembly, only inflation with a pressurized plant air supply (or user-supplied portable compressor). Likewise, once it is no longer needed, it is quick to deflate and remove, allowing rapid return of normal operations in the work area. In another aspect, the device is easy to use, requires little specialized training and no unusual ancillary tooling or equipment. Multiple fill points and dump valves allow for rapid inflation and deflation. In another aspect, the device is resilient since it is made of a heavy vinyl material that is resistant to tearing, abrasion and punctures. Fittings are industrial grade plastics and metal couplings.

The device suitable for the appended claims is much less expensive than portable cage-type units currently in use to protect workers. In another aspect, said device is versatile since it easily fits a wide range of commonly encountered duct work - from 3 foot (1 meter) diameter all the way to 12+ foot (3,65 meters) diameter, regardless of shape (rounded, oval or squared ducts or stacks) and regardless of bends or angles in the ducts and conduits. By virtue of its design, the device will conform to virtually any interior surface irrespective of shape or configuration and remain firmly in place without concern regarding the build-up of material on the interior. The device can also be heat-resistant and can be deployed in areas where residual heat remains such as a smokestack or kiln. The device may also be non-permanent since it does not require fittings, rigid framework or any other permanent modifications to the stacks or ducts in which it is deployed. It remains deployed and in place by friction and pressure against the interior bearing surfaces. The device does not expose workers who are deploying or removing the device to be exposed to any overhead or falling object hazards. The device is also durable since its high strength vinyl material and the natural shock-absorbing abilities of an inflated object allow effective protection against a wide range and weight of falling objects as well as abrasion from coating materials commonly encountered in ducts in cement plants. The present use of a specific device and method provide a quick and easily deployable, highly adaptable protective barrier against dropped or faillng objects or materials commonly present in vertical or high-angle ducts and stacks to protect workers who must work in or underneath such structures.

Further areas of applicability will become apparent from the following description, drawings and appended claims. The description and specific examples in this disclosure are intended for purposes of illustration only and are not intended to limit the scope of the present invention.

### BRIEF DESCRIPTION OF DRAWINGS

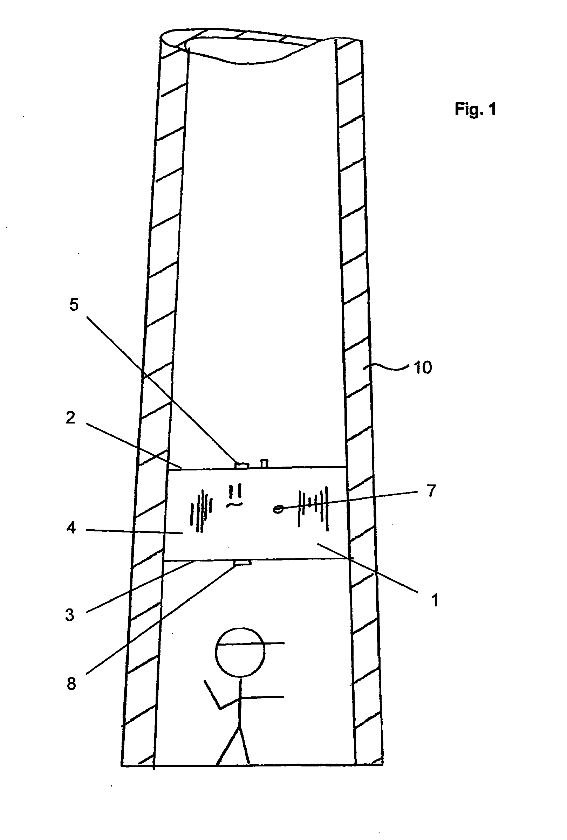

Figure 1 is a cross-sectional view showing an inflatable device installed in a smokestack;

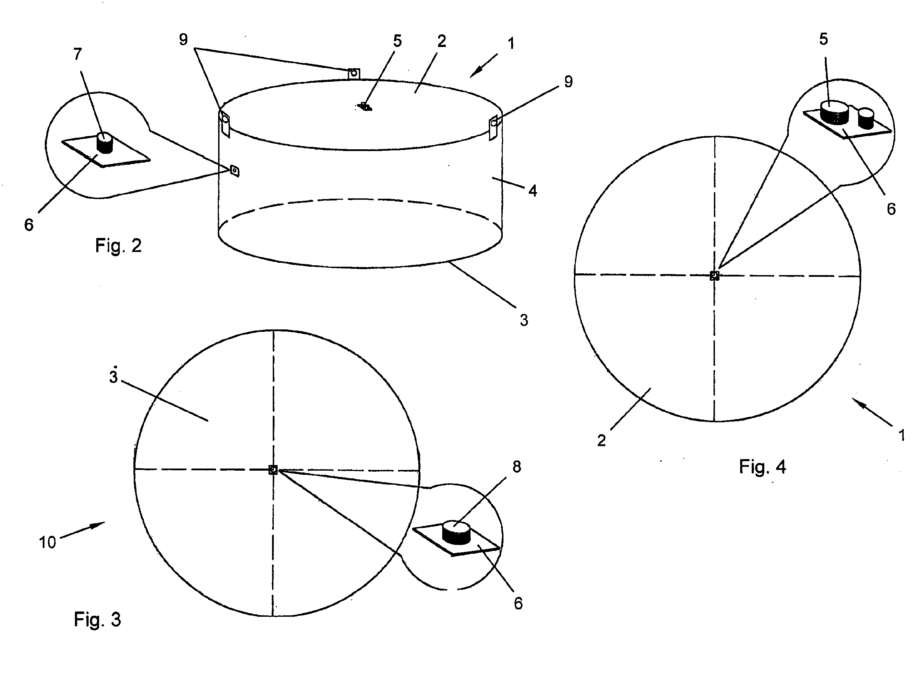

Figure 2 is a perspective view showing the inflatable device;
Figure 3 is a bottom elevational view showing the inflatable device; and
Figure 4 is a top elevational view showing the inflatable device.

### DETAILED DESCRIPTION

Referring to the Figures, the inflatable duct plug safety device 1 consists of an inflatable vinyl bladder, roughly twelve feet (3,65 m) in diameter and five feet (1,5 m) in height, which is generally cylindrical in shape when fully inflated. When inflated, the top 2 of the bladder 1 bows upward slightly, presenting a somewhat convex surface which assists in diverting and absorbing the energy of falling objects. The material of construction is a heavyweight (18 ounce/yd², 600g/m²) reinforced vinyl, which includes three pieces: one each for the top 2 and bottom 3 of the cylinder 1 and the third, a continuous sheet of the same material which is stitched into a cylindrical tube to form the walls 4 of the cylinder 1 and which is then stitched to the top 2 and bottom 3. All stitched seams are sealed with an adhesive material to provide air tightness.

Mounted at the mid-point of the top 2 of the cylinder 1 is a fill and dump valve assembly 5, which has a threaded 1.5 inch (3,81 cm) x 3/4 inch (1,9 cm) NPT nipple, allowing attachment of a number of standard air fittings (used to fill the bladder) and a three inch (7,62 cm) Schedule 40 threaded pipe section sealed by a threaded, gasketed cap, used for releasing air from the filled bladder. Both of these are mounted through a flanged piece of ultra high-molecular weight polyethylene (UHMWP) plate 6 measuring four square inches (25 cm²). A similar air filling assembly 7, excluding the dump valve, is provided at the equator 4 of the bladder 1. This allows for air inflation from the side of the item in the event that top filling is not possible or convenient. An additional dump valve assembly 8, similar to that described above, is provided at the bottom 3 of the bladder 1 and placed at the center point of the cylinder to assist in fully evacuating air from the inflatable item, providing for easier preparation for storage.

Three woven nylon tabs 9 with grommet eyelets are sewn to the main body of the cylinder 1 around the top circumference of the cylinder 1, equally spaced at 120 degrees relative to each other. These are to allow for the use of a hoisting device to retrieve position and/or reposition the device 1 in a vertical or high-angle duct when deployed a significant distance from its point of insertion into the duct or stack. In the final product, these nylon lifting straps may be replaced by loops of vinyl fashioned from the same material as the remainder of the cylinder and sewn in a similar manner. When fully inflated as intended for deployment and use, its appearance is a twelve foot (3,65 m) wide by five foot (1,5 m) tall cylinder 1 with a rounded top 2.

Initially, the user attaches an air supply using a hose and fixture (the threaded attachment allows for a wide range of fixtures and attachment types). The air supply can be from existing plant pneumatic supply not exceeding 90 psi (6,2 bar) or from a portable air compressor. Device 1 is then deployed by placing it in its deflated state into the interior of a duct or smokestack 10 and then positioning it at the point at which the item is desired for final placement or use. For short distances, the use of the attached air hose is sufficient for this purpose, although for more distant deployment from the point of insertion, a hoisting device which utilizes the lifting straps would be used. The air supply is then initiated remotely and air is pumped into the bladder/cylinder causing it to inflate. The bladder is filled to a maximum of 5 psi (0,34 bar) standing interior pressure and the air supply deactivated while leaving the supply hose attached. As the bladder 1 inflates, it will fill and conform to the size and shape of the duct 10 or cylinder, forming a positive seal which will also hold the device in place by means of friction and the interior air pressure impinging on the duct walls. The air supply remains connected which allows for additional air to be introduced in the event the device deflates due to any leakage.

Optionally, a regulator can be attached which performs this automatically.

Once the use of the device is completed, the user simply disconnects the air supply from the air hose, allowing air to leak from the device sufficiently for it to be moved. At this point any personnel below the point of deployment would be evacuated as any dislodged material now resting on the top of the device would be allowed to fail harmlessly below. Once sufficiently deflated, the device could be either repositioned higher or lower in the duct (depending on the user preferences and needs) and then reinflated, or it could be completely removed. Once removed from the duct, the user would remove both dump valve caps and rolls up the device, pushing any remaining air out of the bladder and allowing for compact storage of the device until its next use. The air hose and fittings are removed and the dump valve caps are replaced prior to storage.

In its preferred embodiment, only a single inflatable plug device 1 is used in a cement plant conduit 10. In other words, multiple connected inflatable plug devices are unnecessary, thereby saving part costs, installation time, deflation time, portability, weight and space. In many situations, inflatable device 1 is inflated toward a lower or middle portion of the conduit, for example in smokestack 10, immediately above where the workers are present. Accordingly, the majority of the conduit area above the inflatable device can remain open and unplugged.

The foregoing description of the embodiments has been provided for purposes of illustration and description. It is not intended to be exhaustive or to limit the invention, which is defined in the appended claims.

## Claims

1. Method of keeping debris from falling on a worker present in a preferably cylindrical conduit or an area of a cement manufacturing plant, such as, e.g., vertical or high-angle ducts and stacks, by using an inflatable safety device for temporarily plugging a conduit or area of a cement manufacturing plant, such as, e.g., vertical or high-angle ducts and stacks, to keep debris from falling on a worker below the device, the device comprising an inflatable bladder (1) made from a resilient material having at least one fill and dump valve assembly (5,7,8), comprising
a) deploying an inflatable bladder in such areas above where workers must be present, then
b) initiating air supply and pumping air into the bladder, thereby
c) inflating the bladder to form an impenetrable barrier against falling brick, refractory, or other material build-up.

2. A method according to claim 1, wherein step a) comprises deploying the bladder by placing it in its deflated state into the interior of a duct or smokestack and then positioning it at the point at which the item is desired for final placement or use.

3. A method according to claim 1 or 2, wherein the step of positioning the bladder at the point at which it is desired for final placement or use comprises using a hoisting device which utilizes lifting straps extending through grommet eyelets attached at the circumference of the bladder.

4. A method according to claim 1, 2 or 3, wherein step b) comprises filling the bladder with air to a maximum of 5 psi (0,34 bar) standing interior pressure.

5. A method according to any one of claims 1 to 4, wherein step c) comprises, as the bladder inflates, filling and conforming the bladder to the size and shape of the conduit, forming a positive seal which will also hold the device in place by means of friction and the interior air pressure impinging on the duct walls.

6. A method according to any one of claims 1 to 5, wherein the air supply remains connected with the bladder which allows for additional air to be introduced in the event the device deflates due to any leakage, whereby, optionally, a regulator can be attached which performs this automatically.

7. Use of an inflatable safety device for temporarily plugging a conduit or area of a cement manufacturing plant, such as, e.g., vertical or high-angle ducts and stacks, to keep debris from falling on a worker below the device, the device comprising an inflatable bladder (1) made from a resilient material having at least one fill and dump valve assembly (5,7,8).

8. Use of an inflatable safety device according to claim 7, wherein the inflatable bladder (1) is configured such that after filling with air the bladder (1) conforms to the size and shape of the conduit (10).

9. Use of an inflatable safety device according to claim 7 or 8, wherein the interior air pressure of the bladder (1) is sufficient that the bladder walls (4) impinge on the conduit walls thus forming a positive seal which will also hold the device in place by means of friction.

10. Use of an inflatable safety device according to claim 7, 8 or 9, wherein the bladder (1) comprises a top surface (2) that bows upward slightly when fully inflated, presenting a convex surface.

11. Use of an inflatable safety device according to any one of claims 7 to 10, wherein the bladder (1) has a cylindrical shape when fully inflated.

12. Use of an inflatable safety device according to any one of claims 7 to 11, wherein the bladder (1) is made of heavyweight reinforced vinyl.

13. Use of an inflatable safety device according to claim 12, wherein the bladder (1) comprises a top sheet (2) forming the top surface of the cylinder, a bottom sheet (3) forming the bottom surface of the cylinder bottom surface and a continuous sheet (4) which is stitched into a cylindrical tube to form the walls of the cylinder and which is then stitched to the top (2) and bottom sheets (3).

14. Use of an inflatable safety device according to claim 13, wherein the stitched seams are sealed with an adhesive material to provide air tightness.

15. Use of an inflatable safety device according to any one of claims 7 to 14, wherein a fill and dump valve assembly (5) is arranged at the mid-point of the top (2) of the cylinder, a further fill dump valve assembly (8) is arranged at the mid-point of the bottom (3) of the cylinder and a further fill dump valve assembly (7) is provided at the equator (4) of the bladder (1).

16. Use of an inflatable safety device according to any one of claims 7 to 15, wherein a threaded pipe section is attached to the fill dump valve assembly (5) and sealed by a threaded, gasketed cap.

17. Use of an inflatable safety device according to any one of claims 7 to 16, wherein the fill dump valve assembly (5,7,8) is mounted to the bladder (1) through a flanged piece (6) of ultra high-molecular weight polyethylene (UHMWP) plate.

18. Use of an inflatable safety device according to any one of claims 7 to 17, wherein a plurality, in particular three tabs (9) with grommet eyelets are attached, preferably sewn to the main body of the bladder (1).

19. Use of an inflatable safety device according to claim 18, wherein the tabs (9) with grommet eyelets are arranged around the top circumference of the cylinder, equally spaced relative to each other.

20. Use of an inflatable safety device according to claim 18 or 19, wherein the tabs (9) are made of woven nylon.

## Patentansprüche

1. Verfahren zum Verhindern, dass Materialtrümmer auf einen Arbeiter fallen, der sich in einem vorzugsweise zylindrischen Schacht oder einem Bereich eines Zementherstellungswerkes befindet, wie zum Beispiel in vertikalen oder fast-vertikalen Schächten und Kaminen, unter Verwendung einer aufblasbaren Sicherheitsvorrichtung zum vorübergehenden Verschließen eines Schachts oder Bereichs eines Zementherstellungswerkes, wie zum Beispiel von vertikalen oder fast-vertikalen Schächten und Kaminen, um zu verhindern, dass Materialtrümmer auf einen Arbeiter fallen, der sich unter der Vorrichtung befindet, wobei die Vorrichtung eine aufblasbare Blase (1) umfasst, die aus einem elastischen Material besteht, und mindestens eine Füll- und Ablassventilbaugruppe (5, 7, B) aufweist, wobei das Verfahren Folgendes umfasst:
a) Anbringen einer aufblasbaren Blase in Bereichen oberhalb einer Stelle, wo Arbeiter anwesend sein müssen, dann
b) Initiieren einer Luftzufuhr und Pumpen von Luft in die Blase, dadurch
c) Aufblasen der Blase, um eine unüberwindliche Barriere gegen herabstützende Ziegel, feuerfeste Verkleidung oder sonstige Materialansammlungen zu bilden.

2. Verfahren nach Anspruch 1, wobei Schritt a) das Anbringen der Blase umfasst, indem sie in ihrem entleerten Zustand im Inneren eines Schachtes oder Kamins angeordnet und dann an der Stelle positioniert wird, an der sich das Produkt für die endgültige Platzierung oder Verwendung befinden soll.

3. Verfahren nach Anspruch 1 oder 2, wobei der Schritt des Positionierens der Blase an der Stelle, an der sie sich für die endgültige Platzierung oder Verwendung befinden soll, die Nutzung einer Hebevorrichtung umfasst, die mit Hebeseilen arbeitet, die sich durch Durchführösen erstrecken, die sich am Umfang der Blase befinden.

4. Verfahren nach Anspruch 1, 2 oder 3, wobei Schritt b) umfasst, die Blase mit Luft auf maximal 5 psi (0,34 Bar) stehenden Innendruck zu füllen.

5. Verfahren nach einem der Ansprüche 1 bis 4, wobei Schritt c), während sich die Blase entfaltet, Folgendes umfasst: Füllen und Anpassen der Blase an die Größe und Form des Schachtes, Bilden einer formschlüssigen Dichtung, die außerdem die Vorrichtung mittels Reibung und durch den Innenluftdruck, der auf die Schachtwände wirkt, an ihrem Platz hält.

6. Verfahren nach einem der Ansprüche 1 bis 5, wobei die Luftzufuhr mit der Blase verbunden bleibt, wodurch zusätzliche Luft eingeleitet werden kann, falls aufgrund einer Undichtigkeit Luft aus der Vorrichtung entweicht, wobei optional ein Regler angeschlossen sein kann, der dies automatisch ausführt.

7. Verwenden einer aufblasbaren Sicherheitsvorrichtung zum vorübergehenden Verschließen eines Schachts oder Bereichs eines Zementherstellungswerkes, wie zum Beispiel vertikalen oder fast-vertikalen Schächten und Kaminen, um zu verhindern, dass Materialtrümmer auf einen Arbeiter fallen, der sich unter der Vorrichtung aufhält, wobei die Vorrichtung eine aufblasbare Blase (1) umfasst, die aus einem elastischen Material besteht, und mindestens eine Füll- und Ablassventilbaugruppe (5, 7, 8) aufweist.

8. Verwenden einer aufblasbaren Sicherheitsvorrichtung nach Anspruch 7, wobei die aufblasbare Blase (1) so konfiguriert ist, dass die Blase (1) nach dem Einfüllen der Luft in Größe und Form dem Schacht (10) entspricht.

9. Verwenden einer aufblasbaren Sicherheitsvorrichtung nach Anspruch 7 oder 8, wobei der Innenluftdruck der Blase (1) ausreicht, damit die Blasenwände (4) an den Schachtwänden anliegen, so dass eine formschlüssige Dichtung gebildet wird, welche die Vorrichtung zusätzlich mittels Reibung an ihrem Platz hält.

10. Verwenden einer aufblasbaren Sicherheitsvorrichtung nach Anspruch 7, 8 oder 9, wobei die Blase (1) eine Oberseite (2) umfasst, die geringfügig nach oben ausbaucht, wenn sie vollständig aufgeblasen ist, wodurch eine konvexe Oberfläche entsteht.

11. Verwenden einer aufblasbaren Sicherheitsvorrichtung nach einem der Ansprüche 7 bis 10, wobei die Blase (1) eine zylindrische Gestalt aufweist, wenn sie vollständig aufgeblasen ist.

12. Verwenden einer aufblasbaren Sicherheitsvorrichtung nach einem der Anspruche 7 bis 11, wobei die Blase (1) aus einem schweren verstärkten Vinyl besteht.

13. Verwenden einer aufblasbaren Sicherheitsvorrichtung nach Anspruch 12, wobei die Blase (1) eine obere Folie (2) umfasst, welche die Oberseite des Zylinders bildet, eine untere Folie (3) umfasst, welche die Unterseite des Zylinders bildet, und eine durchgängige Folie (4) umfasst, die zu einer zylindrischen Röhre genäht wird, um die Wände des Zylinders zu bilden, und anschließend an die obere (2) und die untere (3) Folie genäht wird.

14. Verwenden einer aufblasbaren Sicherheitsvorrichtung nach Anspruch 13, wobei die Nähte mit einem Klebstoffmaterial abgedichtet sind, um Luftdichtigkeit herzustellen.

15. Verwenden einer aufblasbaren Sicherheitsvorrichtung nach einem der Ansprüche 7 bis 14, wobei eine Füll- und Ablassventilbaugruppe (5) am Mittelpunkt der Oberseite (2) des Zylinders angeordnet ist, eine weitere Füll- und Ablassventilbaugruppe (8) am Mittelpunkt der Unterseite (3) des Zylinders angeordnet ist und eine weitere Füll- und Ablassventilbaugruppe (7) am Äquator (4) der Blase (1) angeordnet ist.

16. Verwenden einer aufblasbaren Sicherheitsvorrichtung nach einem der Ansprüche 7 bis 15, wobei ein mit einem Gewinde versehener Rohrabschnitt an die Füll- und Ablassventilbaugruppe (5) angeschlossen ist und durch eine mit einem Gewinde und einer Dichtung versehene Kappe abgedichtet wird.

17. Verwenden einer aufblasbaren Sicherheitsvorrichtung nach einem der Ansprüche 7 bis 16, wobei die Füll- und Ablassventilbaugruppe (5, 7, 8) über ein geflanschtes Stück (6) einer Platte aus Polyethylen mit ultrahohem Molekulargewicht (UHMWP) an der Blase (1) montiert ist.

18. Verwenden einer aufblasbaren Sicherheitsvorrichtung nach einem der Ansprüche 7 bis 17, wobei mehrere, insbesondere drei, Laschen (9) mit Durchführösen an den Hauptkorpus der Blase (1) angefügt, vorzugsweise angenäht, sind.

19. Verwenden einer aufblasbaren Sicherheitsvorrichtung nach Anspruch 18, wobei die Laschen (9) mit Durchführösen entlang des oberen Umfangs des Zylinders in gleichem Abstand voneinander angeordnet sind.

20. Verwenden einer aufblasbaren Sicherheitsvorrichtung nach Anspruch 18 oder 19, wobei die Laschen (9) aus Nylongewebe bestehen.

## Revendications

1. Procédé pour empêcher des débris de tomber sur un travailleur présent dans une zone ou un conduit de préférence cylindrique d'une installation de fabrication de ciment, comme, par exemple, des conduits et des cheminées verticaux ou à grand angle, par l'utilisation d'un dispositif de sécurité gonflable pour boucher temporairement un conduit ou une zone d'une installation de fabrication de ciment, comme, par exemple, des conduits et des cheminées verticaux ou à grand angle, de façon à empêcher des débris de tomber sur un travailleur en dessous du dispositif, le dispositif comprenant une vessie gonflable (1) réalisée en un matériau élastique comportant au moins un ensemble de vanne de remplissage et de vidage (5, 7, 8), comprenant :
a) le déploiement d'une vessie gonflable dans les zones au-dessus desquelles des travailleurs doivent être présents, puis,
b) le déclenchement d'une alimentation en air et le pompage d'air dans la vessie, et, de ce fait,
c) le gonflage de la vessie de façon à former une barrière impénétrable contre la chute de briques, de réfractaires, ou d'une autre accumulation de matériau.

2. Procédé selon la revendication 1, dans lequel l'étape a) comprend le déploiement de la vessie par disposition de celle-ci dans son état dégonflé à l'intérieur d'un conduit ou d'une cheminée, puis positionnement de celle-ci au point auquel l'élément est souhaité pour une disposition ou une utilisation finale.

3. Procédé selon la revendication 1 ou 2, dans lequel l'étape de positionnement de la vessie au point auquel elle est souhaitée pour une disposition ou une utilisation finale comprend l'utilisation d'un dispositif de levage qui utilise des courroies d'élévation s'étendant à travers des oeillets de passant fixés à la circonférence de la vessie.

4. Procédé selon la revendication 1, 2 ou 3, dans lequel l'étape b) comprend le remplissage de la vessie par de l'air sous un maximum de pression intérieure au repos de 0,34 bar (5 livres par pouce carré).

5. Procédé selon l'une quelconque des revendications 1 à 4, dans lequel l'étape c) comprend, lorsque la vessie se gonfle, le remplissage et la conformation de la vessie à la taille et à la forme du conduit, formant un scellement efficace qui maintiendra également le dispositif en place par l'impact du frottement et de la pression d'air intérieure sur les parois du conduit.

6. Procédé selon l'une quelconque des revendications 1 à 5, dans lequel l'alimentation en air reste reliée à la vessie, ce qui permet à de l'air additionnel d'être introduit dans le cas où le dispositif se dégonfle du fait d'une quelconque fuite, grâce à quoi, de façon optionnelle, un régulateur peut être fixé, celui-ci effectuant cela automatiquement.

7. Utilisation d'un dispositif de sécurité gonflable pour boucher temporairement un conduit ou une zone d'une installation de fabrication de ciment, comme, par exemple, des conduits et des cheminées verticaux ou à grand angle, de façon à empêcher des débris de tomber sur un travailleur en dessous du dispositif, le dispositif comprenant une vessie gonflable (1) réalisée en un matériau élastique comportant au moins un ensemble de vanne de remplissage et de vidage (5, 7, 8).

8. Utilisation d'un dispositif de sécurité gonflable selon la revendication 7, dans laquelle la vessie gonflable (1) est configurée de telle sorte qu'après le remplissage avec de l'air, la vessie (1) se conforme à la taille et à la forme du conduit (10).

9. Utilisation d'un dispositif de sécurité gonflable selon la revendication 7 ou 8, dans laquelle la pression d'air intérieure de la vessie (1) est suffisante pour que les parois (4) de la vessie heurtent les parois du conduit, formant ainsi un scellement efficace qui maintiendra également le dispositif en place par frottement.

10. Utilisation d'un dispositif de sécurité gonflable selon la revendication 7, 8 ou 9, dans laquelle la vessie (1) comprend une surface supérieure (2) qui s'incurve légèrement vers le haut lorsqu'elle est complètement gonflée, présentant une surface convexe.

11. Utilisation d'un dispositif de sécurité gonflable selon l'une quelconque des revendications 7 à 10, dans laquelle la vessie (1) a une forme cylindrique lorsqu'elle est complètement gonflée.

12. Utilisation d'un dispositif de sécurité gonflable selon l'une quelconque des revendications 7 à 11, dans laquelle la vessie (1) est réalisée en vinyle renforcé de poids élevé.

13. Utilisation d'un dispositif de sécurité gonflable selon la revendication 12, dans laquelle la vessie (1) comprend une feuille supérieure (2) constituant la surface supérieure du cylindre, une feuille inférieure (3) constituant la surface inférieure de la surface inférieure du cylindre, et une feuille continue (4) qui est cousue sous la forme d'un tube cylindrique de façon à constituer les parois du Cylindre, et qui est ensuite cousue aux feuilles supérieure (2) et inférieure (3).

14. Utilisation d'un dispositif de sécurité gonflable selon la revendication 13, dans laquelle les raccords cousus sont scellées de façon étanche avec un matériau adhésif de façon à produire une étanchéité vis-à-vis de l'air.

15. Utilisation d'un dispositif de sécurité gonflable selon l'une quelconque des revendications 7 à 14, dans laquelle un ensemble de vanne de remplissage et de vidage (5) est disposé au point milieu du sommet (2) du cylindre, un autre ensemble de vanne de remplissage et de vidage (8) est disposé au point milieu du bas (3) du cylindre et un autre ensemble de vanne de remplissage et de vidage (7) est disposé à l'équateur (4) de la vessie (1).

16. Utilisation d'un dispositif de sécurité gonflable selon l'une quelconque des revendications 7 à 15, dans laquelle une section de tuyau filetée est fixée à l'ensemble de vanne de remplissage et de vidage (5) et est scellé par un capuchon à joint d'étanchéité fileté.

17. Utilisation d'un dispositif de sécurité gonflable selon l'une quelconque des revendications 7 à 16, dans laquelle l'ensemble de vanne de remplissage et de vidage (5, 7, 8) est monté sur la vessie (1) par l'intermédiaire d'une pièce à brides (6) d'une plaque de polyéthylène de masse moléculaire ultra-élevée (UHMWP).

18. Utilisation d'un dispositif de sécurité gonflable selon l'une quelconque des revendications 7 à 17, dans laquelle une pluralité, et, particulièrement, trois pattes (9) avec des oeillets de passant sont fixées, de préférences cousues, au corps principal de la vessie (1).

19. Utilisation d'un dispositif de sécurité gonflable selon la revendication 18, dans laquelle les pattes (9) avec des oeillets de passant sont disposées autour de la circonférence supérieure du cylindre, de façon également espacée les unes par rapport aux autres.

20. Utilisation d'un dispositif de sécurité gonflable selon la revendication 18 ou 19, dans laquelle les pattes (9) sont réalisées en Nylon tissé.
